# EUROPEAN PATENT SPECIFICATION

(11) **EP 3 670 071 B1**
(45) Date of publication and mention of the grant of the patent: **18.08.2021**
(21) Application number: 19215107.4
(22) Date of filing: 11.12.2019
(51) Int. Cl.: B23Q 11/08, F16P 3/02

(54) **HEAT-SEALED FOLDING PROTECTOR FOR MACHINE TOOLS WITH MOVING HEAD**
HEISSVERSIEGELTER FALTSCHUTZ FÜR WERKZEUGMASCHINEN MIT BEWEGLICHEM KOPF
PROTECTION PLIANTE THERMOSCELLÉE POUR MACHINES-OUTILS À TÊTE MOBILE

(30) Priority: 19.12.2018 IT 201800020164
(43) Date of publication of application: 24.06.2020
(73) Proprietor: La Protec Srl, 26037 San Giovanni In Croce (CR) (IT)
(72) Inventor: VIOLA, Riccardo, 43121 Parma (PR) (IT); VIOLA, Tommaso, 26037 SAN GIOVANNI IN CROCE (CR) (IT)
(74) Representative: Mari, Marco Giovanni

(56) References cited:
- DE-A1- 4 435 824
- DE-A1-102006 018 452
- DE-B3-102006 043 938
- DE-U1- 20 018 846
- DE-U1-202015 104 146

## Description

### Technical field of the application

The invention refers to the sector of mechanical accessory components for machine tools.

More specifically the invention relates to a heat-sealed folding protector for machine tools with moving head.

However, heat-sealed folding protectors according to the invention may also be used on machine tools in general or on automatic industrial machines where there is a need to cover and protect a working area.

As is known to the average technician in the sector, folding protectors entirely similar to those object of this invention can be created not only by means of heat-sealing, but also using further assembly methods, for example gluing or stapling.

### State of the art

In general, folding protectors are adapted to protect the working area of machine tools and in particular assembly components and guides, on which the heads of said machine tools slide, from external elements that may compromise their efficiency and duration.

These protectors represent a valid guard against dirt, chippings, coolant fluids, emulsions, accidental impact by tools, etc.

Furthermore, said protectors help to prevent accidents in the workplace and provide considerable benefits to the machine also from a purely aesthetic point of view.

Traditional heat-sealed folding protectors comprise:
- a pleated fabric cover;
- a plurality of PVC structural beams adapted to support said cover;
- auxiliary beams adapted to be stably associated with at least one of said structural beams through coupling means.

The PVC structural beams can be moved away from each other and towards each other, respectively to distend the cover and to allow it to be folded up, thanks to movement of the mobile head of the machine tool.

The end structural beams must be coupled with auxiliary head beams, made of metal, necessary for fixing to the machine tool.

For some folding protectors it may be necessary to couple certain structural beams with auxiliary stiffening beams in order to ensure the whole protector has greater strength and flexural resistance.

In other cases, it might be necessary to couple some structural beams with auxiliary beams to support ulterior protector components, such as for example leaf springs, slide blocks, or pantographs to facilitate the opening and closing movement.

At present, coupling of the PVC structural beams and said auxiliary beams takes place by gluing, or riveting, or using metal rivet fastenings.

This type of folding protector has certain limits and disadvantages, above all due to the method used to couple the PVC structural beams and the auxiliary beams, whether these be head, stiffening or support beams for additional components functional to the work of the protector itself.

The main disadvantages are:
- long fitting and assembly times for the folding protector due to the time required to dry the adhesives or the operating times for positioning and locking of all the individual rivets and rivet fastenings;
- impossibility of creating protectors with certain specific geometries, as the rivets and rivet fastenings require suitable tightening spaces;
- non-reversibility of the coupling between the structural beam and the auxiliary beam, as any removal and separation of the two beams requires special tools such as drills and angle grinders, with the risk of damaging the entire protector;
- uncertainty regarding the quality of the coupling operation and onerous and protracted controls on the quality itself.

From document DE 10 2006 018452 A1 a folding protector is known that comprises:
- a pleated cover;
- a plurality of structural beams adapted to support said cover;
- at least one auxiliary beam adapted to be stably associated with one of said structural beams through coupling means,
characterized in that said coupling means comprise:
- at least one seat obtained on said structural beam comprising at least one flexible wing adapted to deform elastically;
- at least one pin associated with said auxiliary beam;
- a first and a second abutment wall associated with said at least one pin.

In that protector, the pin is not included between the abutment walls and this determines a greater working length in the coupling means.

Furthermore, in that solution the flexible wing deforms so that it abandons the containment surface of the structural beam, so that greater space is required between the structural beam and the auxiliary beam, resulting in a greater working thickness in the coupling means.

### Presentation of the invention

The aim of the invention is to overcome these limits.

The aim of the invention is to create a heat-sealed folding protector for machine tools with moving head that is functional, strong and long-lasting.

The aim of the invention is also to create a folding protector that is easy and economical to produce, as well as being of easy and rapid assembly and composition.

The aims are achieved with a heat-sealed folding protector for machine tools with moving head comprising:
- a pleated cover;
- a plurality of PVC structural beams adapted to support said cover;
- at least one auxiliary beam adapted to be stably associated with one of said structural beams through coupling means,
characterized in that said coupling means comprise:
- at least one seat obtained on said structural beam comprising at least one flexible wing adapted to deform elastically;
- at least one pin associated with said auxiliary beam;
- a first and a second abutment wall associated with said at least one pin,
characterized in that:
- said first and said second abutment wall are arranged so as to comprise said at least one pin between them,
- said at least one flexible wing adapted to deform elastically in the containment surface of said structural beam as a result of the insertion of said at least one pin in said seat and to return to the initial position after insertion, retaining said pin,
where said first and said second abutment wall coact with each other to contain said structural beam in correspondence with said coupling means.

According to a first embodiment of the invention, said pin comprises at least one tooth adapted to coact with said at least one flexible wing to maintain said pin in position and prevent it from exiting said seat.

Advantageously, said seat comprises a pair of flexible wings and said pin comprises a pair of teeth.

In a preferred embodiment of the invention, said coupling means comprise at least one clip, comprising said pin and a plate adapted to act as first abutment wall, where said clip is adapted to be associated in advance with said auxiliary beam through fastening means, so that said auxiliary beam acts as a second abutment wall.

In particular, said fastening means comprise holes produced in said auxiliary beam and pivots, projecting from said plate beyond said pin, adapted to be riveted in said holes.

Advantageously, said clip is made of aluminium.

According to a further possible embodiment of the invention, said coupling means comprise said pin and a plate, where said pin is adapted to be associated in advance with said plate and with said auxiliary beam through respective fastening means, so that said plate acts as a first abutment wall and said auxiliary beam acts as a second abutment wall.

According to a further embodiment, said coupling means comprise at least one button, comprising two discs coupled to each other with the interposition of a spacer, where said button is adapted to be associated in advance with said auxiliary beam through fastening means, so that said two discs act as first and second abutment wall, where said fastening means comprise two flexible arms produced on said pin between which said spacer can be inserted.

Advantageously, said at least one button is made of PVC.

Furthermore, said auxiliary beam is alternatively made of steel or PVC.

The main advantage of the invention derives from use of the elastic return of the material forming the seat, and in particular the flexible wing, to obtain a safe fitted coupling between the PVC structural beam and any auxiliary beam.

The pin, entering the seat, elastically deforms said at least one wing that then repositions itself in the initial configuration, coacting with a tooth that prevents it from coming out.

The elastic deformation of said at least one wing takes place on the main surface of the structural beam in which said seat is formed; there is no transversal flexing of the beam.

The abutment walls contain coupling means so that there can be no transversal movement of the pin from the seat. Said abutment walls both overlap each other exactly at said pin.

In certain embodiments of the invention one of said abutment walls is formed by the auxiliary beam itself, with additional advantages of simplicity of production.

Advantageously, the auxiliary beams may be prepared in advance with fixing of the relevant pin, externally to the protector. Once the clip on which the pin is formed has been fixed to the auxiliary beam, the auxiliary beam itself can be inserted directly from above, and therefore in a direction transversal to the extension of the beams, on the corresponding structural beam of the protector, without the need for particular working and manoeuvring spaces.

In an alternative embodiment of the invention it is possible to couple PVC structural beams with auxiliary beams elongating the folding protector. In this case the pin/seat connection occurs longitudinally to the structural beam.

Coupling always takes place by a simple interference fit, with a reduction in the times required for assembly and installation of the protector.

The coupling system between structural beam and auxiliary beam is reversible: at any time, it is possible to separate the two beams using a simple screwdriver, without the risk of damaging the protector and in a fast and immediate manner.

All the protector components can be made using the most suitable materials. The combination of a seat formed in the PVC of the structural beam, an aluminium pin, and a metal auxiliary stiffening beam offers performance advantages for the whole protector (maximum strength), and at the same time advantages of speed and low production costs (individual components mass produced using different methods).

### Brief description of the drawings

These and other advantages will be more clearly seen in the following, in which a preferred embodiment of the invention will be described, as a non-limiting example, and with the aid of the figures, where:
Fig. 1 shows, in cross-section, a heat-sealed folding protector according to a possible embodiment of the invention;
Figures 2a and 2b show, in a front plan view, a component of the folding protector according to two possible embodiments of the invention;
Figures 3a and 3b show, in a side and front plan view, respectively, a component of the folding protector of Fig. 1;
Fig. 4 shows, in a front plan view, a portion of the folding protector according to the invention;
Fig. 5 shows, in a partially transparent front plan view, a portion of the protector illustrated in Fig. 1 during the assembly phase;
Fig. 6 shows, in a cross section, details of the protector illustrated in Fig. 5 when assembled;
Fig. 7 shows, in a side plan view, a portion of a heat-sealed folding protector according to a further possible embodiment of the invention in the assembly phase;
Fig. 8 shows, in a side view, a component of the folding protector of Fig. 7;
Figures 9a and 9b show, in a partially transparent front plan view and in a side view, respectively, the portion of the folding protector of Fig. 7 when assembled;
Figures 10a and 10b show, in a side and front plan view, respectively, a component of the folding protector according to a possible alternative embodiment of the invention;
Fig. 11 shows, in a partial front plan view, a portion of the folding protector compatible with the embodiment of the invention illustrated in Figures 2b and 10a, 10b;
Fig. 12 shows, in a partial and partially transparent front plan view, a portion of the protector illustrated in Figures 2b and 11 in the assembly phase;
Fig. 13 shows, in a partially transparent and partially cross section front plan view, a portion of the protector in the assembly phase, according to a further possible embodiment of the invention;
Figures 14a and 14b show, in a partially exploded and assembled cross section, respectively, a heat-sealed folding protector according to a further possible embodiment of the invention.

### Detailed description of the preferred embodiments of the invention

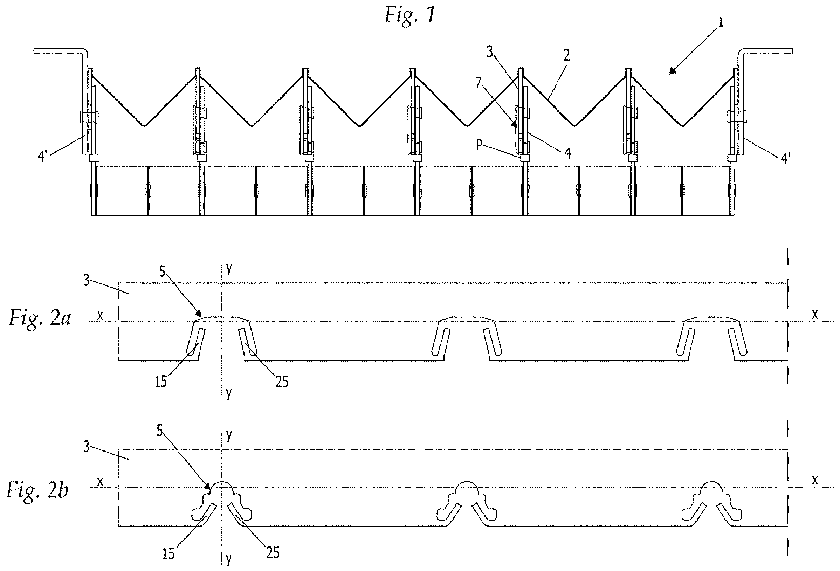

Reference is made to Figure 1, which illustrates a folding protector 1 for machine tools with moving head.

Said protector 1 essentially comprises:
- a pleated fabric cover 2;
- a plurality of PVC structural beams 3 to support said cover 2;
- a pair of auxiliary head beams 4', made of metal, adapted to allow jointing of the protector 1 onto the frame of the machine tool;
- a plurality of auxiliary stiffening beams 4, made of metal, adapted to be stably associated with said structural beams 3 to give greater robustness and flexural rigidity to the entire protector 1.

In the embodiment illustrated, said auxiliary stiffening beams 4 also act as auxiliary support beams for slide blocks P. Other auxiliary support elements might be selected from pantographs, shock absorbers, leaf springs, etc...

Said auxiliary beams 4, 4' may alternately be made of steel or PVC according to the function they are to carry out.

Fixing of the structural beams 3 to the auxiliary beams 4, 4' takes place by means of coupling means such as seat 5 and pin 6.

Figures 2a, 2b, 3a, 3b, 4, 5 and 6 illustrate a first type of coupling means.

Figure 2a illustrates a section of a structural beam 3 with longitudinal axis x. On it are provided a plurality of seats 5 equidistant from each other.

Each seat 5 comprises a pair of flexible wings 15, 25, made from the same PVC material used to form the beam 3, arranged symmetrically with respect to a vertical axis y transversal to the longitudinal axis x of the beam itself. Said flexible wings 15, 25 are normally in an inclined position with respect to said vertical axis y.

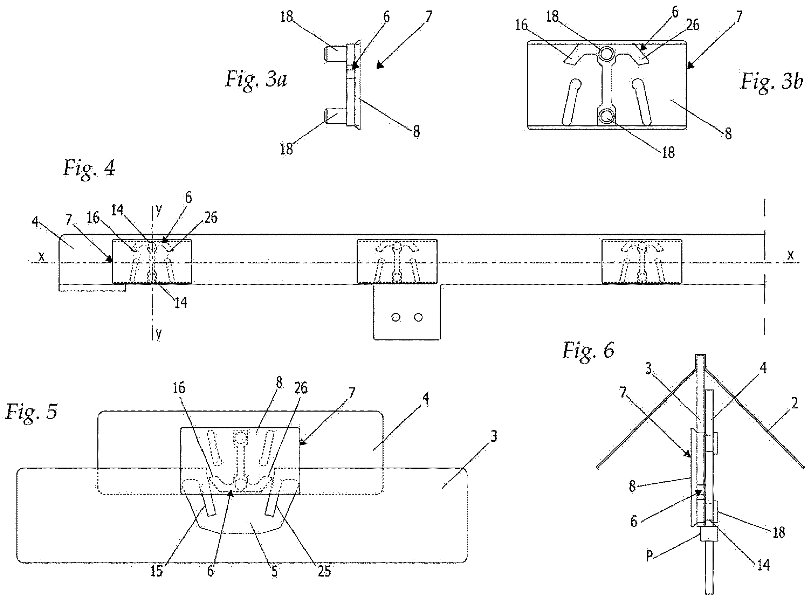

Figure 4 illustrates a section of an auxiliary stiffening beam 4 with longitudinal axis x. It is associated with a plurality of pins 6 equidistant from each other.

Each pin 6 comprises a pair of teeth 16, 26, arranged symmetrically with respect to a vertical axis y transversal to the longitudinal axis x of the beam itself.

The distance between said two teeth 16, 26 is greater than the distance between said two flexible wings 15, 25 so that, when a pin 6 is inserted into a corresponding seat 5, said flexible wings 15, 25 deform elastically, forced by said teeth 16, 26.

Once the pin 6 has been inserted, the wings 15, 25 return to their initial configuration and the teeth 16, 26 act as retention means preventing pulling out.

With respect to the whole seat 5, the weak point in which flexure of said wings 15, 25 occurs is distal to the space assigned to interference fitting of the pin 6: in this way the pin 6 is more contained in the seat 5 and coupling between the parts is more secure.

As shown in particular in Figures 3a and 3b, said pin 6 is not formed directly on said auxiliary beam 4, but is associated therewith by means of a clip 7.

Said clip 7 substantially comprises said pin 6 and a plate 8 of rectangular shape, acting as a first abutment wall.

Said clip 7 is made of aluminium.

Said clip 7 and in particular said plate 8 comprises fastening means to said auxiliary beam 4.

Said fastening means comprise holes 14 produced in said auxiliary beam 4 and pivots 18, projecting from said plate 8 beyond said pin 6. Said pivots 18 are adapted to be riveted in said holes 14.

As can be seen from Figure 6, said clip 7 is fastened to said auxiliary beam 4 so that between the plate 8 forming said first abutment wall and the auxiliary beam 4, which forms said second abutment wall, there remains a space adapted to physically contain said pin 6 and said seat 5 inserted one into the other.

Figure 2b illustrates a structural beam 3 in PVC comprising seats 5 with an alternative conformation with respect to the one illustrated in Figure 2a.

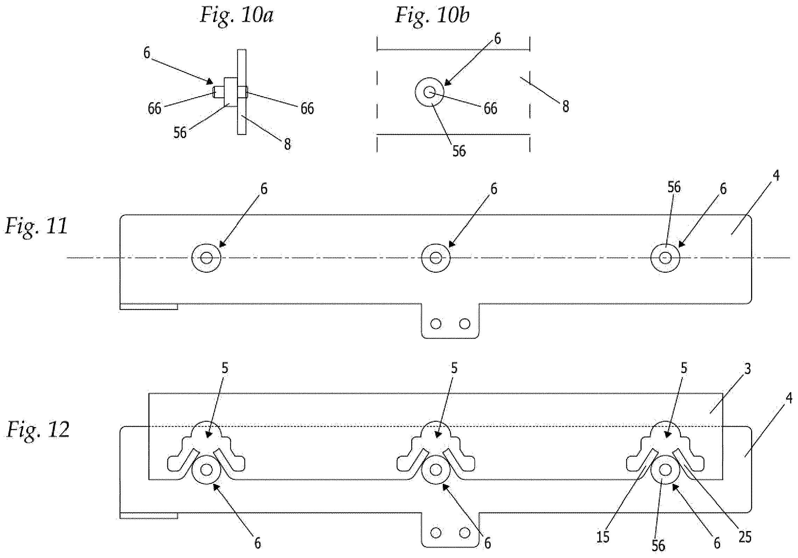

The seats 5 of Figure 2b are adapted to co-operate with the pins illustrated in Figures 10a, 10b, 11 and 12.

Figure 11 illustrates a section of an auxiliary stiffening beam 4 with longitudinal axis x. It is associated with a plurality of pins 6 equidistant from each other.

As is particularly evident from Figures 10a and 10b, each pin 6 comprises a tooth 56 having the conformation of a cylindrical body from which protrude axially and from opposite sides two rivet fastenings 66 acting as fastening means to said auxiliary beam 4 and to a plate 8.

Said plate 8 acts as first abutment wall and said auxiliary beam 4 acts as second abutment wall.

The diameter of said tooth 56 is greater than the distance between said two flexible wings 15, 25 so that, when a pin 6 is inserted into a corresponding seat 5, said flexible wings 15, 25 deform elastically, forced by the dimensions of said tooth 56 (Fig. 12).

Once the pin 6 has been inserted, the wings 15, 25 return to their initial configuration and the cylindrical body of said tooth 56 acts as a retention means preventing pulling out.

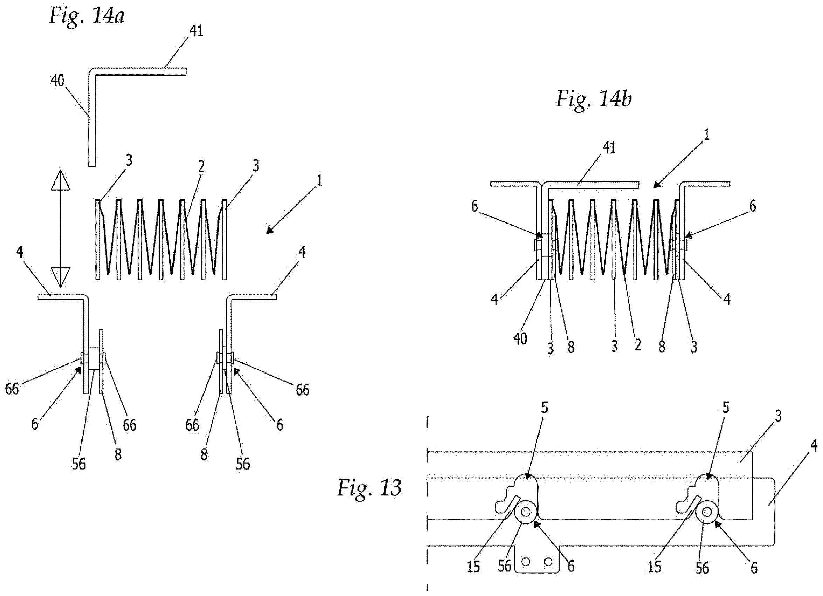

The type of pin 6 illustrated in Figures 10a and 10b may also co-operate with a particular configuration of seat 5, illustrated in the alternative embodiment of Fig. 13, where said seat 5 comprises a single flexible wing 15, again formed from the same PVC material used to create the beam 3.

Naturally, the pin 6 illustrated in Figures 3a and 3b, if suitably modified to comprise a single tooth 16, may also co-operate with the seat 5 illustrated in the alternative embodiment of Fig. 13.

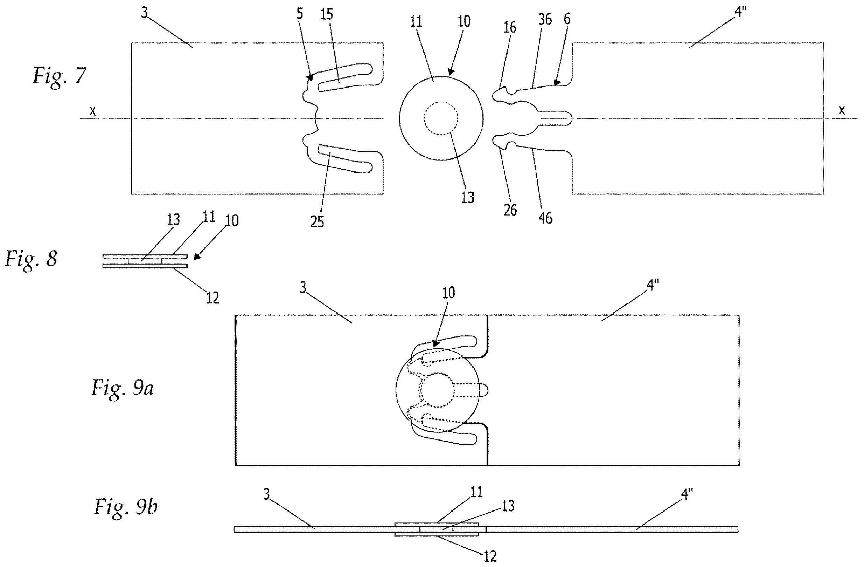

Figures 7, 8, 9a and 9b illustrate a second type of coupling means used in the case of joining a structural beam 3 and an auxiliary beam 4" with the function of lengthening the folding protector 1.

Figure 7 illustrates a section of structural beam 3 and a section of auxiliary beam 4", both made of PVC.

Said structural beam 3, in correspondence with its end, comprises a seat 5 facing in a direction longitudinal to the beam itself.

Said seat 5 comprises a pair of flexible wings 15, 25, made from the same PVC material used to form the beam 3, arranged symmetrically with respect to the longitudinal axis x of the beam itself.

Said auxiliary beam 4", in correspondence with its end facing towards said structural beam 3, comprises a pin 6 facing in a direction longitudinal to the beam itself.

Said pin 6 comprises a pair of teeth 16, 26 formed of the same PVC material used to create the beam, arranged symmetrically to the longitudinal axis x of the beam itself, and adapted to co-operate with said flexible wings 15, 25 to guarantee stable coupling of the two beams 3, 4".

Said teeth 16, 26 are associated with two flexible arms 36, 46, substantially parallel with each other, that create said pin 6.

In this alternative embodiment said coupling means also comprise a button 10.

Said button 10 comprises two discs 11, 12 coupled to each other with the interposition of a spacer 13 (Figure 8).

Said button 10 is made of PVC.

Said button 10 is adapted to be associated with said auxiliary beam 4" through fastening means.

Said fastening means are created by two flexible arms 36, 46 that form the pin 6 on the auxiliary beam 4" and between which said spacer 13 can be inserted (Figure 9a).

From Figure 9b, which illustrates completed coupling of the structural beam 3 and the auxiliary beam 4", it is clear that said two discs 11, 12 act as first and second abutment wall to contain said pin 6 and said seat 5.

With reference to Figures 14a and 14b, it is clear that, if suitably sized, it is also possible to connect more than one beam on a single pin 6, not only the structural beam 3 of the folding protector 1 but also further auxiliary beams.

In particular, in the example illustrated, as well as the structural beam 3 in PVC of the protector, the pin 6 is also connected to an auxiliary beam 40 comprising a horizontal strip 41 screening and protecting the pleated cover 2, useful when the protector 1 is in the closed configuration.

## Claims

1. Heat-sealed folding protector (1) for machine tools with moving head comprising:
- a pleated cover (2);
- a plurality of PVC structural beams (3) adapted to support said cover (2);
- at least one auxiliary beam (4, 4', 4") adapted to be stably associated with one of said structural beams (3) through coupling means,
wherein said coupling means comprise:
- at least one seat (5) obtained on said structural beam (3) comprising at least one flexible wing (15, 25) adapted to deform elastically;
- at least one pin (6) associated with said auxiliary beam (4, 4', 4");
- a first and a second abutment wall associated with said at least one pin (6),
**characterized in that**:
- said first and said second abutment wall are arranged so as to comprise said at least one pin (6) between them,
- said at least one flexible wing (15, 25) is adapted to deform elastically in the containment surface of said structural beam (3) as a result of the insertion of said at least one pin (6) in said seat (5) and to return to the initial position after insertion, retaining said pin (6),
wherein said first and said second abutment wall coact with each other to contain said structural beam (3) in correspondence with said coupling means.

2. Heat-sealed folding protector (1) according to claim 1, **characterized in that** said pin (6) comprises at least one tooth (16, 26, 56) adapted to coact with said at least one flexible wing (15, 25) to maintain said pin (6) in position and prevent it from exiting said seat (5).

3. Heat-sealed folding protector (1) according to claim 1, **characterized in that** said seat (5) comprises a pair of flexible wings (15, 25) and said pin (6) comprises a pair of teeth (16, 26).

4. Heat-sealed folding protector (1) according to claim 1, **characterized in that** said coupling means comprise at least one clip (7), comprising said pin (6) and a plate (8) adapted to act as first abutment wall, wherein said clip (7) is adapted to be associated in advance with said auxiliary beam (4, 4') through fastening means, so that said auxiliary beam (4, 4') acts as a second abutment wall.

5. Heat-sealed folding protector (1) according to claim 4, **characterized in that** said fastening means comprise holes (14) produced in said auxiliary beam (4, 4') and pivots (18), projecting from said plate (8) beyond said pin (6), adapted to be riveted in said holes (14).

6. Heat-sealed folding protector (1) according to claim 4, **characterized in that** said clip (7) is made of aluminium.

7. Heat-sealed folding protector (1) according to claim 1, **characterized in that** said coupling means comprise said pin (6) and a plate (8), where said pin (6) is adapted to be associated in advance with said plate (8) and with said auxiliary beam (4, 4') through respective fastening means (66), so that said plate (8) acts as a first abutment wall and said auxiliary beam (4, 4') acts as a second abutment wall.

8. Heat-sealed folding protector (1) according to claim 1, **characterized in that** said coupling means comprise at least one button (10), comprising two discs (11, 12) coupled to each other with the interposition of a spacer (13), wherein said button (10) is adapted to be associated in advance with said auxiliary beam (4") through fastening means, so that said two discs (11, 12) act as first and second abutment wall, wherein said fastening means comprise two flexible arms (36, 46) produced on said pin (6) between which said spacer (13) can be inserted.

9. Heat-sealed folding protector (1) according to claim 8, **characterized in that** said at least one button (10) is made of PVC.

10. Heat-sealed folding protector (1) according to claim 1, **characterized in that** said auxiliary beam (4, 4', 4) is alternatively made of steel or PVC.

## Patentansprüche

1. Heißversiegelter Faltschutz (1) für Werkzeugmaschinen mit beweglichem Kopf, umfassend:
- eine gefaltete Abdeckung (2);
- eine Vielzahl von PVC-Strukturträgern (3), geeignet, um die besagte Abdeckung (2) zu tragen;
- mindestens einen Hilfsträger (4, 4', 4"), geeignet, um mit einem der besagten Strukturträger (3) durch Kopplungsmittel stabil verbunden zu werden,
wobei
die besagten Kupplungsmittel Folgendes umfassen:
- mindestens einen auf dem besagten Strukturträger (3) erhaltenen Sitz (5) mit mindestens einem flexiblen Flügel (15, 25), geeignet, um sich elastisch zu verformen;
- mindestens einen Stift (6), der dem besagten Hilfsträger (4, 4', 4") zugeordnet ist;
- eine erste und eine zweite Anschlagwand, die mit dem besagten mindestens einen Stift (6) verbunden sind,
**dadurch gekennzeichnet, dass**:
- die besagte erste und die besagte zweite Anschlagwand so angeordnet sind, dass sie den besagten mindestens einen Stift (6) zwischen sich aufnehmen,
- der besagte mindestens eine flexible Flügel (15, 25) geeignet ist, um sich in der Einschließungsfläche des besagten Strukturträgers (3) infolge des Einsetzens des besagten mindestens einen Stifts (6) in den besagten Sitz (5) elastisch zu verformen und nach dem Einsetzen in die Ausgangsposition zurückzukehren, wobei er den besagten Stift (6) festhält,
wobei die besagte erste und die besagte zweite Anschlagwand miteinander zusammenwirken, um den besagten Strukturträger (3) in Übereinstimmung mit den besagten Kopplungsmitteln aufzunehmen.

2. Heißversiegelter Faltschutz (1) gemäß Anspruch 1, **dadurch gekennzeichnet, dass** der besagte Stift (6) mindestens einen Zahn (16, 26, 56) umfasst, der geeignet ist, mit dem besagten mindestens einen flexiblen Flügel (15, 25) zusammenzuwirken, um den besagten Stift (6) in Position zu halten und zu verhindern, dass er aus dem besagten Sitz (5) austritt.

3. Heißversiegelter Faltschutz (1) gemäß Anspruch 1, **dadurch gekennzeichnet, dass** der besagte Sitz (5) ein Paar flexibler Flügel (15, 25) umfasst und der besagte Stift (6) ein Paar Zähne (16, 26) umfasst.

4. Heißversiegelter Faltschutz (1) gemäß Anspruch 1, **dadurch gekennzeichnet, dass** die besagten Kopplungsmittel mindestens eine Klammer (7) umfassen, die den besagten Stift (6) und eine Platte (8) umfassen, geeignet, um als erste Anschlagwand zu wirken, wobei die besagte Klammer (7) geeignet ist, um im Voraus mit dem besagten Hilfsträger (4, 4') durch Befestigungsmittel verbunden zu werden, so dass der besagte Hilfsträger (4, 4') als zweite Anschlagwand wirkt.

5. Heißversiegelter Faltschutz (1) gemäß Anspruch 4, **dadurch gekennzeichnet, dass** die besagten Befestigungsmittel in dem besagten Hilfsträger (4, 4') gefertigte Löcher (14) und Zapfen (18) umfassen, die aus der besagten Platte (8) über den besagten Stift (6) hinausragen, geeignet, um in die besagten Löcher (14) genietet zu werden.

6. Heißversiegelter Faltschutz (1) gemäß Anspruch 4, **dadurch gekennzeichnet, dass** die besagte Klammer (7) aus Aluminium hergestellt ist.

7. Heißversiegelter Faltschutz (1) gemäß Anspruch 1, **dadurch gekennzeichnet, dass** die besagten Kopplungsmittel den besagten Stift (6) und eine Platte (8) umfassen, wobei der besagte Stift (6) geeignet ist, um im Voraus mit der besagten Platte (8) und mit dem besagten Hilfsträger (4, 4') durch entsprechende Befestigungsmittel (66) verbunden zu werden, so dass die besagte Platte (8) als eine erste Anschlagwand wirkt und der besagte Hilfsträger (4, 4') als eine zweite Anschlagwand wirkt.

8. Heißversiegelter Faltschutz (1) gemäß Anspruch 1, **dadurch gekennzeichnet, dass** die besagten Kopplungsmittel mindestens einen Knopf (10) umfassen, der zwei Scheiben (11, 12) umfasst, die unter Zwischenschaltung eines Abstandshalters (13) miteinander gekoppelt sind, wobei der besagte Knopf (10) geeignet ist, um im Voraus mit dem besagten Hilfsträger (4") durch Befestigungsmittel verbunden zu werden, so dass die besagten zwei Scheiben (11, 12) als erste und zweite Anschlagwand wirken, wobei die besagten Befestigungsmittel zwei flexible Arme (36, 46) umfassen, die auf dem besagten Stift (6) gefertigt sind, zwischen die der besagte Abstandshalter (13) eingeführt werden kann.

9. Heißversiegelter Faltschutz (1) gemäß Anspruch 8, **dadurch gekennzeichnet, dass** der besagte mindestens eine Knopf (10) aus PVC hergestellt ist.

10. Heißversiegelter Faltschutz (1) gemäß Anspruch 1, **dadurch gekennzeichnet, dass** der besagte Hilfsträger (4, 4', 4) alternativ aus Stahl oder PVC hergestellt ist.

## Revendications

1. Protection pliante thermoscellée (1) pour machines-outils à tête mobile comprenant :
- une couverture plissée (2) ;
- une multitude de poutres structurelles en PVC (3) adaptées pour supporter ladite couverture (2) ;
- au moins une poutre auxiliaire (4, 4', 4") adaptée pour être associée de manière stable à l'une desdites poutres structurelles (3) par des moyens de couplage,
où lesdits moyens de couplage comprennent :
- au moins un siège (5) obtenu sur ladite poutre structurelle (3) comprenant au moins une aile flexible (15, 25) adaptée pour se déformer élastiquement ;
- au moins une broche (6) associée à ladite poutre auxiliaire (4, 4', 4") ;
- une première et une seconde paroi de butée associées à ladite broche (6) au minimum,
**caractérisée par le fait que** :
- ladite première et ladite seconde paroi de butée sont disposées de manière à comprendre ladite au broche (6) au minimum entre elles,
- ladite aile flexible (15, 25) au minimum est adaptée pour se déformer élastiquement dans la surface de confinement de ladite poutre structurelle (3) à la suite de l'insertion de ladite broche (6) au minimum dans ledit siège (5) et pour revenir à la position initiale après l'insertion, en retenant ladite broche (6),
où ladite première et ladite seconde paroi de butée coopèrent l'une avec l'autre pour contenir ladite poutre structurelle (3) en correspondance avec lesdits moyens de couplage.

2. Protection pliante thermoscellée (1) selon la revendication 1, **caractérisée par le fait que** ladite broche (6) comprend au moins une dent (16, 26, 56) adaptée pour coopérer avec ladite aile flexible (15, 25) au minimum pour maintenir ladite broche (6) en position et l'empêcher de sortir dudit siège (5).

3. Protection pliante thermoscellée (1) selon la revendication 1, **caractérisée par le fait que** ledit siège (5) comprend une paire d'ailes flexibles (15, 25) et ladite broche (6) comprend une paire de dents (16, 26).

4. Protection pliante thermoscellée (1) selon la revendication 1, **caractérisée par le fait que** lesdits moyens de couplage comprennent au moins une pince (7), comprenant ladite broche (6) et une plaque (8) adaptée pour agir comme une première paroi de butée, dans lequel ladite pince (7) est adaptée pour être associée à l'avance à ladite poutre auxiliaire (4, 4') par des moyens de fixation, de sorte que ladite poutre auxiliaire (4, 4') agit comme une seconde paroi de butée.

5. Protection pliante thermoscellée (1) selon la revendication 4, **caractérisée par le fait que** lesdits moyens de fixation comprennent des trous (14) réalisés dans ladite poutre auxiliaire (4, 4') et des pivots (18), faisant saillie de ladite plaque (8) au-delà de ladite broche (6), adaptés pour être rivetés dans lesdits trous (14).

6. Protection pliante thermoscellée (1) selon la revendication 4, **caractérisée par le fait que** ladite pince (7) est réalisée en aluminium.

7. Protection pliante thermoscellée (1) selon la revendication 1, **caractérisée par le fait que** lesdits moyens de couplage comprennent ladite broche (6) et une plaque (8), où ladite broche (6) est adaptée pour être associée à l'avance à ladite plaque (8) et à ladite poutre auxiliaire (4, 4') par l'intermédiaire de moyens de fixation respectifs (66), de sorte que ladite plaque (8) agit comme une première paroi de butée et ladite poutre auxiliaire (4, 4') agit comme une seconde paroi de butée.

8. Protection pliante thermoscellée (1) selon la revendication 1, **caractérisée par le fait que** lesdits moyens de couplage comprennent au moins un bouton (10), comprenant deux disques (11, 12) couplés l'un à l'autre avec l'interposition d'une entretoise (13), où ledit bouton (10) est adapté pour être associé à l'avance à ladite poutre auxiliaire (4") par des moyens de fixation, de sorte que lesdits deux disques (11, 12) agissent comme une première et une seconde paroi de butée, dans lequel lesdits moyens de fixation comprennent deux bras flexibles (36, 46) produits sur ladite broche (6) entre lesquels ladite entretoise (13) peut être insérée.

9. Protection pliante thermoscellée (1) selon la revendication 8, **caractérisée par le fait que** ledit bouton (10) au minimum est réalisé en PVC.

10. Protection pliante thermoscellée (1) selon la revendication 1, **caractérisée par le fait que** ladite poutre auxiliaire (4, 4', 4) est alternativement réalisée en acier ou en PVC.
